# EUROPÄISCHE PATENTSCHRIFT

(11) **EP 3 115 626 B1**
(45) Veröffentlichungstag und Bekanntmachung des Hinweises auf die Patenterteilung: **06.11.2019**
(21) Anmeldenummer: 16178157.0
(22) Anmeldetag: 06.07.2016
(51) Int. Cl.: F16B 13/00, F16B 13/14

(54) **VERFAHREN ZUM VERBINDEN EINES VERBINDUNGSELEMENTS, INSBESONDERE EINES DÜBELS, MIT EINEM WERKSTÜCK UND VERBINDUNGSELEMENT ZUR VERBINDUNG MIT EINEM WERKSTÜCK**
METHOD FOR CONNECTION OF A CONNECTING ELEMENT, IN PARTICULAR A DOWEL, TO A WORKPIECE, AND CONNECTING ELEMENT FOR CONNECTING TO A WORKPIECE
PROCEDE DE LIAISON D'UN ELEMENT DE LIAISON, EN PARTICULIER D'UNE CHEVILLE, A UNE PIECE A USINER ET ELEMENT DE LIAISON DESTINE A ETRE RELIE A UNE PIECE A USINER

(30) Priorität: 09.07.2015 DE 102015212853
(43) Veröffentlichungstag der Anmeldung: 11.01.2017
(73) Patentinhaber: HOMAG Bohrsysteme GmbH, 33442 Herzebrock-Clarholz (DE)
(72) Erfinder: Bettermann, Thomas, 33699 Bielefeld (DE); Austermeier, Martin, 33397 Rietberg (DE); Kettner, Richard, 02796 Kurort Jonsdorf (DE)
(74) Vertreter: Hoffmann Eitle

(56) Entgegenhaltungen:
- WO-A1-98/42988
- WO-A2-2010/079203
- DE-A1- 10 154 228

## Beschreibung

### Technisches Gebiet

Die Erfindung betrifft ein Verfahren zum Verbinden eines Dübels mit einem Werkstück, wobei der Dübel in das Werkstück eingebracht und mit dem Werkstück verbunden wird. Derartige Werkstücke aus dem Bereich der Möbel- oder Bauelementeindustrie, die bevorzugt plattenförmig ausgebildet sind, bestehen insbesondere zumindest teilweise aus insbesondere aus Holz, Holzfaser enthaltenden Materialien, Holzverbundwerkstoffen.

### Stand der Technik

Dübel der eingangs genannten Art werden verwendet, um Werkstücke miteinander zu verbinden, oder ein Bauteil an einem Werkstück anbringen zu können. Zur Verbindung eines Dübels mit dem Werkstück kann der Dübel beispielsweise erwärmt werden, so dass er sich plastisch in einem Werkstück verformt und damit verzahnt, wie beispielsweise in der WO 2005/092596 A1 offenbart. Des Weiteren ist aus der WO 2009/052644 A1 ein Dübel bekannt, der ein thermoplastisches Material aufweist, das sich beispielsweise durch Ultraschalleinwirkung derart mit dem Werkstück verbindet, dass der Dübel formschlüssig aufgenommen ist. Nachdem das thermoplastische Material erhärtet ist, kann eine Schraube in den mit dem Werkstück verbundenen Dübel hineingeschraubt werden.

Derartige Verbindungen haben sich bewährt. Allerdings werden immer höhere Anforderungen an die Sicherheit und/oder Umweltverträglichkeit der Verbindungen gestellt. Insbesondere betrifft dies die Herstellung solcher Dübel für Werkstücke und die Entsorgung derartiger Dübel im Werkstück.

Die WO 98/42988 A1 lehrt einen Verbindungsstift, mit dem zwei Teile aus einem porösem Material miteinander verbunden werden und der an vorgebebenen Verankerungsstellen in dem porösem Material verankert wird. Der Verbindungsstift besteht aus einem thermoplastischen Kunststoff und die Energie für die Plastifizierung kann durch Ultraschallvibration zugeführt werden.

Des Weiteren offenbart die DE 101 54 228 A1 ein Verbindungselement zum Verbinden zweier Platten aus Holz, wobei jede Platte eine Aufnahme aufweist, in der das Verbindungselement fest einliegt, wobei das Verbindungselement aus Biopolymer besteht.

### Darstellung der Erfindung

Es ist Aufgabe der vorliegenden Erfindung ein Verbindungselement, insbesondere Dübel, zu schaffen, das mit geringem Aufwand eine sichere Verbindung zu einem Werkstück bereitstellen kann, sowie ein Verfahren zum Verbinden eines Verbindungselements, insbesondere Dübel, mit einem Werkstück.

Diese Aufgabe wird erfindungsgemäß durch das Verfahren zum Verbinden eines Verbindungselements, insbesondere eines Dübels, mit einem Werkstück mit den Merkmalen von Anspruch 1 gelöst.

Demzufolge umfasst das Verfahren insbesondere: Bereitstellen eines Werkstücks, das zumindest abschnittsweise Holz und/oder Holzwerkstoffe und einen Hohlraum mit zumindest einer Seitenwand bzw. Seitenwänden zum Aufnehmen des Verbindungselements, insbesondere Dübels, aufweist, Bereitstellen eines Verbindungselements, das einen urgeformten Körper aus biologisch abbaubarem Material, insbesondere aus Biopolymer, aufweist, wobei ein Außenabschnitt des Verbindungselements oder des urgeformten Körpers zur Kontaktierung der Seitenwand des Werkstücks vorgesehen ist, Zuführen von Energie zumindest abschnittsweise in den Außenabschnitt und zumindest abschnittsweise Erweichen des Außenabschnitts durch die Energiezufuhr (bevorzugt auf eine Verarbeitungstemperatur von ca. 160-230°C), und Erhärten des Außenabschnitts in zumindest abschnittsweisem Kontakt mit der Seitenwand des Hohlraum des Werkstücks, wodurch das Verbindungselement zumindest abschnittsweise an seinem Außenabschnitt mit dem Werkstück verbunden wird.

Des Weiteren ist ein Verbindungselement, insbesondere ein Dübel, offenbart. Demnach weist das Verbindungselement, insbesondere der Dübel, einen urgeformten Körper aus biologisch abbaubarem Material, insbesondere aus Biopolymer, auf, wobei ein Außenabschnitt des Verbindungselements bzw. des urgeformten Körpers zur Kontaktierung mit der Seitenwand eines Hohlraums in einem Werkstück vorgesehen ist, das zumindest abschnittsweise Holz und/oder Holzwerkstoffe aufweist, wobei zumindest der Außenabschnitt ein Material aufweist, das unter Energiezufuhr erweichbar ist, und das Verbindungselement derart ausgestaltet ist, dass der zumindest abschnittsweise erweichte und/oder zu erweichende Außenabschnitt des Verbindungselements mit der Seitenwand des Werkstücks zumindest abschnittsweise in Kontakt bringbar ist und der zumindest abschnittsweise erweichte Außenabschnitt in zumindest abschnittsweisem Kontakt mit der Seitenwand des Hohlraums des Werkstücks erhärtbar ist, wodurch der Außenabschnitt mit dem Werkstück zumindest abschnittsweise verbunden wird.

Ferner hat die vorliegende Erfindung den Vorteil, dass die Umweltverträglichkeit einer Verbindung eines Verbindungselements/Dübels mit einem Werkstück verbessert werden kann. Die Umweltverträglichkeit umfasst vorzugsweise sowohl die Entsorgung als auch die, insbesondere Ressourcenschonende, Herstellung. Darüber hinaus kann ein Verbindungselement aus biologisch abbaubarem Material, insbesondere aus Biopolymer, ohne zusätzlichen Leim in einem Werkstück aus zumindest teilweise Holz und/oder Holzwerkstoffe befestigt werden.

Durch die Verwendung eines urgeformten Körpers aus biologisch abbaubarem Material bzw. eines Biopolymers kann das Verbindungselement zumindest teilweise auf biologischen Produkten basierend hergestellt werden. Des Weiteren ist die Abbaubarkeit des Verbindungselements verbessert. Vorzugsweise besteht das Verbindungselement ausschließlich aus biologisch abbaubarem Material, so dass auch bei der Entsorgung eines Werkstücks, in dem Verbindungselement aufgenommen ist, und das insbesondere aus Holz oder Holzwerkstoffen besteht, dem Verbindungselement hinsichtlich eines Recyclingvorgangs nicht gesondert Rechnung getragen werden muss.

Der Erfindung liegt der Gedanke zugrunde, Werkstücke, die zumindest abschnittsweise aus Holz und/oder Holzwerkstoffen bestehen, mit einem Verbindungselement zu verbinden, der zumindest teilweise biologisch basiert und abbaubar ist. Insbesondere dann, wenn das Verbindungselement vollständig aus biologisch abbaubaren Materialien besteht, ist kein Entfernen des Verbindungselements aus einem Holzwerkstück bei der Entsorgung mehr nötig. Darüber hinaus kann ein Verbindungselement aus biologisch abbaubarem Material, insbesondere aus Biopolymer, ohne zusätzlichen Leim in einem Werkstück aus zumindest teilweise Holz und/oder Holzwerkstoffe befestigt werden.

Das Verbindungselement weist einen urgeformten Körper aus biologisch abbaubarem Material, insbesondere aus Biopolymer, auf, der sich durch biologische Abbaubarkeit auszeichnet und im Wesentlichen biobasiert ist, indem er beispielsweise durch fermentative und polymerchemische Prozesse aus Zucker hergestellt ist. Insbesondere weist das Biopolymer Lignin auf. Des Weiteren können in dem Material Naturharze, Naturwachse, Naturöle, Zellulose und natürliche Verstärkungsfasern enthalten sein, wie beispielsweise Holzfasern, Flachsfasern, Hanf, Sisal, Jute oder andere Pflanzenfasern. Das Material des Verbindungselements kann des Weiteren Polyhydroxialkanoate, Polyhydroxialbutyraten, Polycaprolacton, Polyester und/oder Stärke aufweisen.

Vorzugsweise ist das Material des Verbindungselements homogen und weist Biopolymere und thermoplastische Materialien auf, die alle biologisch abbaubar sind. Es ist aber auch denkbar, dass lediglich der Außenabschnitt des Verbindungselements das thermoplastische Material aufweist, nicht hingegen der Innenabschnitt.

Unter einem urgeformten Körper ist insbesondere ein im Wesentlichen fester Körper in seiner Erstform zu verstehen, der aus einem formlosen Stoff, beispielsweise einer pastösen Masse, hergestellt worden ist. Beispielsweise kann der Körper durch Gießen, Einbringen oder Einspritzen einer pastösen Masse in eine Form oder 3D-Drucken hergestellt werden.

Das Material des Außenabschnitts geht bei Erwärmung bzw. Aktivierung in einen viskoelastischen Zustand über. Beim Erweichen weist das Verbindungselement zumindest im Außenabschnitt derart viskose Eigenschaften auf, dass das Material plastisch verformt werden kann. Das Verbindungselement ist in diesem Zustand pastös bzw. gelartig. Dabei soll die Viskosität aber ausreichend niedrig sein, damit sich das Verbindungselement beim Erhärten derart mit dem Werkstück verbinden kann, dass der Dübel insbesondere nicht einfach aus dem Werkstück herausgezogen werden kann. Insbesondere bei einer rauen Seitenwand des Werkstücks kann Material des Außenabschnitts des Verbindungselements derart in die Seitenwände des Werkstücks eindringen, dass sich das Verbindungselement mit dem Werkstück verzahnt.

Das Material des Verbindungselements, insbesondere das des Außenabschnitts bzw. des urgeformten Körpers, ist durch Zuführen von Energie erweichbar, d.h. es weist thermoplastische Eigenschaften auf. Als thermoplastisches Material, das zur Erweichung des Außenabschnitts des urgeformten Körpers beiträgt, werden insbesondere biologisch abbaubare Thermoplaste bzw. thermoplastische Polyester verwendet, wie beispielsweise Polyhydroxialkanoate, Polyhydroxialbutyrate und Polycaprolacton.

Das Material des Außenabschnitts härtet bei Abkühlung aus. Beim Erhärten ändert das Verbindungselement seine Eigenschaften dahingehend, dass sich seine Form ohne zusätzliche Einwirkung von externen Kräften von selbst nicht mehr ändert, er ist also nicht mehr viskoelastisch. Das Verbindungselement wird also "fest" und die sich in Poren, Aussparungen und/oder Hinterschnitte des Werkstücks erstreckenden Abschnitte des Dübels halten diesen im Werkstück. Das Erhärten des Außenabschnitts des Verbindungselements erfolgt üblicherweise ohne zusätzlichen Bearbeitungsschritt, alleine durch Abkühlen des erweichten Materials durch die kühlere Umgebungsluft. Es ist aber denkbar, dass zur Beschleunigung des Erhärtens bspw. Kühlluft beaufschlagt wird oder eine andere Aushärtungstechnik abhängig von dem Material des Verbindungselements angewendet wird.

Die Energiezufuhr wird durch Reibungswärme erreicht, die beim Einbringen des Dübels in den Hohlraum durch Reibung zwischen dem Außenabschnitt des Verbindungselements und der Seitenwand/ den Seitenwänden des Hohlraums entsteht. Hierbei ist insbesondere an die bei einer Rotation des Verbindungselements um seine Längsachse beim Einsetzen des Verbindungselements auftretende Reibung oder die Reibung zu denken, die beim Einsetzen des Verbindungselements in seine Längsrichtung durch eine translatorische bzw. Längsbewegung entsteht. In diesem Fall ist keine zusätzliche Energiequelle nötig, die eigens zum Erweichen des Außenabschnitts des Verbindungselements dient. Auch eine Kombination einer rotatorischen und einer translatorischen Bewegung ist denkbar, um die ggf. noch umfassender Reibungswärme zu erzeugen.

Für eine Energiezufuhr durch Reibungswärme kann das Verbindungselement beispielsweise in eine in einer Bohrspindel gehaltene Vorrichtung eingebracht und bei Drehung der Bohrspindeln in das Werkstück eingesetzt werden.

Besonders vorteilhafte Weiterbildungen der Erfindung sind in den abhängigen Ansprüchen angegeben.

Alternativ oder zusätzlich kann Energie dem Außenabschnitt des Verbindungselements vor, während und/oder nach dem Einbringen des Verbindungselements in den Hohlraum zugeführt werden. Es ist denkbar, dass das Verbindungselement außerhalb des Hohlraums erwärmt und erweicht wird (beispielsweise durch Heißluft) und im erweichten Zustand in den Hohlraum eingesetzt wird. Auch ist es möglich, dass das (nichterweichte) Verbindungselement, nachdem er in den Hohlraum eingebracht worden ist, durch Einbringen eines Heizrohrs in das Innere des Verbindungselements erwärmt und erweicht wird. Als Energiezufuhr können insbesondere Heißluft, Ultraschall, Laserstrahlung und Mikrowellen dienen, die auch kombiniert eingesetzt werden können.

Insbesondere kann das Verbindungselement einen Innenabschnitt zum Aufnehmen eines Befestigungselements, bspw. einer Schraube, aufweisen. Dabei wird im Wesentlichen nur der Außenabschnitt des Verbindungselements erweicht, der Innenabschnitt behält seine Form während des Erweichens des Außenabschnitts, so dass der Innenabschnitt auch nach dem Erweichen des Außenabschnitts des Verbindungselements weiterhin zum Aufnehmen der Schraube geeignet ist, indem insbesondere ein im Innenabschnitt ausgebildetes Gewinde im Verbindungselement beim Erweichen des Außenabschnitts erhalten bleibt. Alternativ kann das Verbindungselement auch ohne Ausnehmung im Inneren zur Aufnahme einer Schraube, bevorzugt in einer Zylinderform, ausgebildet sein. Er kann insbesondere ein massiver Zylinder sein, der vorzugsweise nach Kontaktieren der Seitenwand des Hohlraums des Werkstücks aus dem Werkstück vorsteht. Unter dem Außenabschnitt wird dann vorzugsweise nur der äußere Teil des Verbindungselements angesehen, der in dem Werkstück aufgenommen ist, nicht der vorstehende äußere Teil des Verbindungselements.

Vorzugsweise sind nach dem Erhärten des Materials das Verbindungselement und das Werkstück stoffschlüssig und/oder formschlüssig miteinander verbunden. Dadurch wird eine dauerhafte Fixierung des Verbindungselements in dem Werkstück erreicht, ohne zusätzliche Komponenten zur Verbindung. Insbesondere kann auf den zusätzlichen Einsatz von Leim oder einem anderen Haftmittel verzichtet werden.

Das Verbindungselement ist vorzugsweise frei von Klebstoffen, da durch das Erweichen des Außenabschnitts des Verbindungselements selbst kein zusätzlicher Klebstoff zur Verbindung mit dem Werkstück benötigt wird. Es sei aber nicht ausgeschlossen, dass dennoch die Verwendung von Klebstoff oder zusätzlichem Verbindungsmaterial erfolgt. Es ist beispielsweise denkbar, dass das Material, aus dem das Verbindungselement besteht, zusätzlich in den Hohlraum, insbesondere vor Einbringen des Verbindungselements, eingefügt wird.

Weitere Merkmale und Vorteile der Erfindung werden anhand der nachfolgenden ausführlichen Beschreibung noch näher ersichtlich werden.

### Kurze Beschreibung der Zeichnungen

- Fig. 1: zeigt ein Werkstück und einen Dübel (Verbindungselement) einer ersten Ausführungsform der vorliegenden Erfindung, wobei Fig. 1a den Zustand vor Einsetzen des Dübels und in Fig. 1b den Zustand nach Einsetzen und Verbinden des Dübels mit dem Werkstück zeigt;
- Fig. 2: zeigt ein Werkstück und einen Dübel (Verbindungselement) einer zweiten Ausführungsform der vorliegenden Erfindung, wobei Fig. 2a den Zustand vor Einsetzen des Dübels und in Fig. 2b den Zustand nach Einsetzen und Verbinden des Dübels mit dem Werkstück zeigt;
- Fig. 3: zeigt einen Dübel vor Einsetzen einer Schraube in den Innenabschnitt des Dübels.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

Fig. la zeigt ein plattenförmiges Werkstück 2, das einen Hohlraum 3, insbesondere eine Sacklochbohrung, aufweist. Ein derartiges Werkstück kann beispielsweise eine Massivholzplatte, eine Spanplatte, eine MDF-Platte, eine HDF-Platte oder ähnliches sein.

Die Seitenwand 2a begrenzen den beispielsweise mit einem Bohrer oder einem Fräser eingebrachten Hohlraum 3 im Werkstück 2. Der Hohlraum 3 erstreckt sich von einer Oberfläche des Werkstücks 2 in das Werkstück hinein und definiert eine Öffnung im Werkstück 2. In diese Öffnung wird der Dübel 1, der zumindest abschnittsweise ein Biopolymer aufweist, in den Hohlraum 3 eingesetzt. Der Dübel 1 ist derart gestaltet bzw. bemessen, dass sein Außenabschnitt 1a, d.h. im Wesentlichen seine Seitenwand, in Kontakt mit der Seitenwand 2a des Werkstücks 2 nach dem Einsetzen sind.

Beim Einbringen des Dübels 1 kann dieser beispielsweise um seine Längsachse L rotiert werden oder aber auch in die Längsrichtung L durch eine translatorische Bewegung ohne Rotation eingeschoben werden. Selbstverständlich ist auch eine Kombination dieser Bewegungen möglich. Rein beispielhaft wird der Dübel 1 in eine Bearbeitungsspindel eingesetzt und während Durchführung einer Drehbewegung in den Hohlraum 3 eingesetzt.

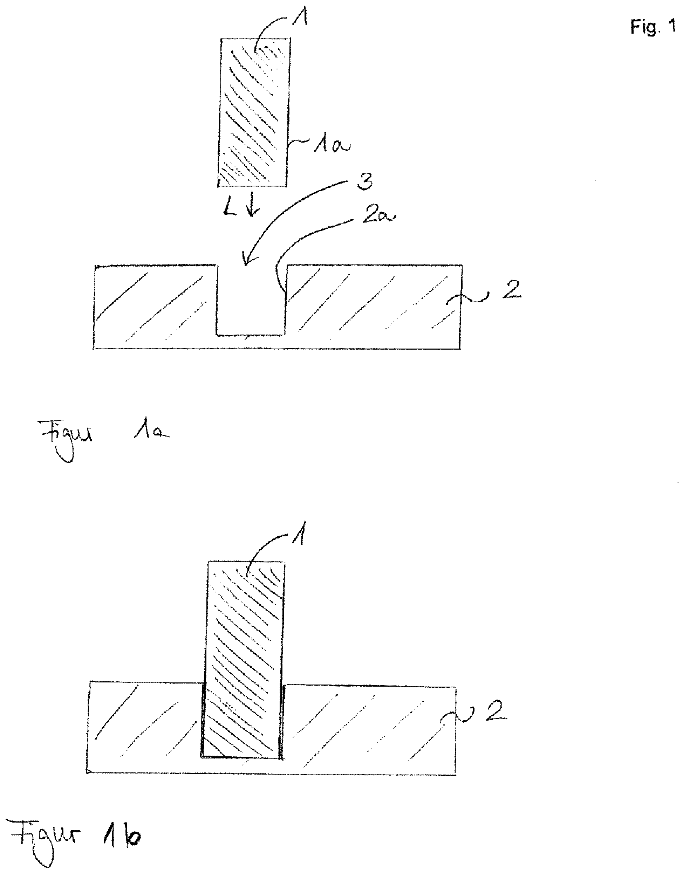

Der Dübel 1 weist, ebenso wie der Hohlraum 3, einen kreisförmigen Querschnitt auf. In der ersten bevorzugten Ausführungsform steht der Dübel 1 nach Verbinden mit dem Werkstück 2 über die Oberfläche des Werkstücks vor, siehe Fig. 1b. Der vorstehende Teil des Dübels 1 kann in einen Hohlraum eines Elements (nicht gezeigt) aufgenommen werden, mit dem das Werkstück 2 verbunden werden soll. Die Verbindung mit diesem Element kann auf die gleiche Weise wie die Verbindung des Dübels 1 mit dem Werkstück 2 erfolgen.

Der Dübel 1 der ersten Ausführungsform wird durch Reibungswärme erweicht, die beim Einbringen des Dübels 1 in das Werkstück 2 auftritt, wobei aber auch andere Energiezufuhrformen möglich sind, insbesondere solche, bei denen nur die Erweichung des Teils des Dübels 1 erreicht werden kann, der im Werkstück 2 aufgenommen ist.

Der aus dem Werkstück 2 vorstehende Teil des Dübels 1 wird vorzugsweise bei der Verbindung des Dübels 1 mit dem Werkstück 2 nicht oder nur vernachlässigbar stark erweicht. Somit kann der vorstehende Teil des Dübels 1 in eine Öffnung eines weiteren Werkstücks eingebracht und zur Verbindung des Werkstücks 2 mit diesem Werkstück genutzt werden.

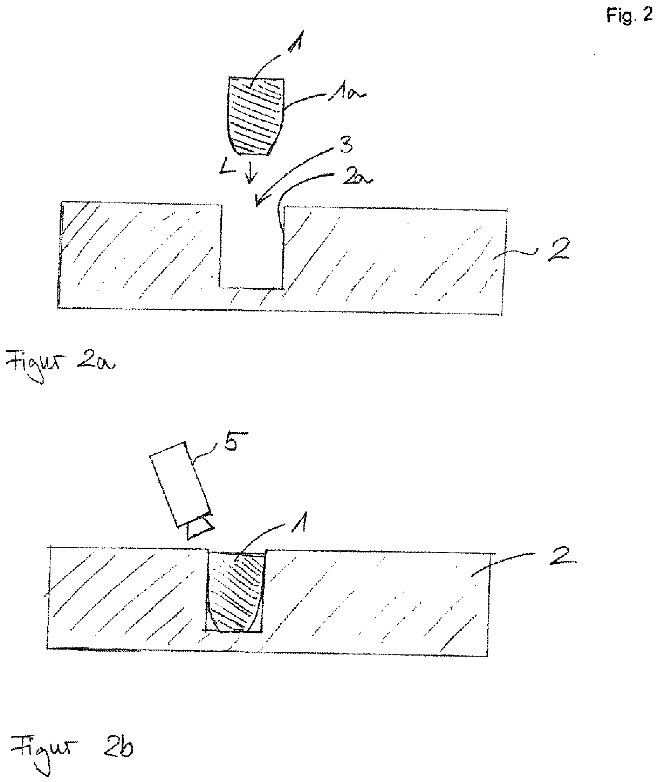

Fig. 2 zeigt eine zweite bevorzugte Ausführungsform, bei der die Länge des Dübels 1 so bemessen ist, dass er nach Verbindung mit dem Werkstück 2 nicht von der Oberfläche des Werkstücks vorsteht. Die Länge des Dübels 1 ist in dieser zweiten Ausführungsform, entsprechend der Tiefe des Hohlraums 3 in dem Werkstück 2 bemessen, sodass der Dübel 1 im Wesentlichen bündig mit der Werkstückoberfläche abschließt. Somit kann auch eine Kontaktierung des Dübels an seiner Vorderseite bzw. Spitze mit dem Ende des Hohlraums 3 in dem Werkstück 2 erfolgen. Der Zustand, in dem der Dübel 1 in das Werkstück 2 eingesetzt ist, ist in Fig. 2b dargestellt.

Nachdem der Dübel 1 in das Werkstück 2, wie in Fig. 2b gezeigt, eingebracht worden ist, kann der Dübel 1 durch eine Energiequelle 5 bestrahlt werden, beispielsweise mit Mikrowellen oder Laserstrahlung, wodurch der Außenabschnitt 1a des Dübels erweicht wird. Das Material des Außenabschnitts des Dübels 1 dringt in die Seitenwand 2a des Werkstücks 2 ein und sorgt so für eine stabile Verbindung nach Erhärten des Materials des Außenabschnitts.

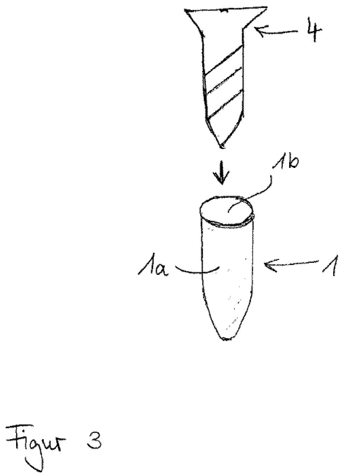

Fig. 3 zeigt den Dübel 1 einer weiteren Ausführungsform, in der der Dübel 1 einen Innenabschnitt 1b zum Aufnehmen der Schraube 4 aufweist. Der Innenabschnitt weist ein Gewinde (nicht gezeigt) auf, in das die Schraube 4 hineingeschraubt werden kann.

Der Dübel 1 gemäß den zuvor genannten Ausführungsformen kann zumindest abschnittsweise Aktivierungselemente oder eine Aktivierungsschicht aufweisen. Wenn beispielsweise eine Energiequelle verwendet wird, um den Außenabschnitt 1a des Dübels 1 zu erweichen, sind die Aktivierungselemente oder eine Aktivierungsschicht, insbesondere Absorberpartikel oder eine Absorberschicht, eingerichtet, die eingebrachte Energie zu absorbieren und entsprechend Wärme abzugeben. Auf diese Weise wird ein zumindest abschnittsweises Erweichen des Außenabschnitts des Dübels 1 erreicht.

Auch im Falle einer Energiezufuhr durch Reibung des Dübels an einer Fläche des Werkstücks können am Dübel 1 insbesondere Absorberpartikel oder eine Absorberschicht vorgesehen sein, um die Reibung zwischen dem Dübel 1 und dem Werkstück zu erhöhen. Auf diese Weise kann der Dübel 1 bzw. dessen Außenabschnitt schneller erweicht werden.

Auch ist es möglich, einen Aktivierungsabschnitt bzw. eine Aktivierungsschicht vorzusehen, bei der bspw. durch mechanische Krafteinwirkung Aktivierungselemente angeregt werden, die wiederum zum Erweichen des Dübels 1 bzw. eines Außenabschnitts hiervon verwendet wird. Derartige Aktivierungselemente können auch in einer Hülle aufgenommen sein, die durch mechanische Krafteinwirkung geöffnet wird. Ferner kann bspw. durch eine chemische Reaktion ein Erweichen des Dübels 1 bzw. eines Außenabschnitts hiervon erreicht werden. Insbesondere kann ein Zweikomponentensystem zum Einsatz kommen.

## Patentansprüche

1. Verfahren zum Verbinden eines Verbindungselements, insbesondere Dübels (1), mit einem Werkstück (2), das folgende Schritte umfasst:
Bereitstellen des Werkstücks (2), das zumindest abschnittsweise Holz und/oder Holzwerkstoffe und einen Hohlraum (3) mit zumindest einer Seitenwand (2a) zum Aufnehmen des Verbindungselements (1) aufweist,
Bereitstellen des Verbindungselements (1), das einen urgeformten Körper aus biologisch abbaubarem Material, insbesondere aus Biopolymer, aufweist, und ein Außenabschnitt (1a) des Verbindungselements (1) zur Kontaktierung der Seitenwand (2a) des Werkstücks (2) vorgesehen ist,
Zuführen von Energie zumindest abschnittsweise in den Außenabschnitt (1a) und zumindest abschnittsweises Erweichen des Außenabschnitts (1a) durch die Energiezufuhr,
Erhärten des Außenabschnitts (1a) in zumindest abschnittsweisem Kontakt mit der Seitenwand (2a) des Hohlraums des Werkstücks (2), wodurch das Verbindungselement zumindest abschnittsweise an seinem Außenabschnitt (1a) mit dem Werkstück (2) verbunden wird, wobei
die Energiezufuhr Reibungswärme umfasst, die beim Einbringen des Verbindungselements (1) in den Hohlraum (3) durch Reibung zwischen dem Außenabschnitt (1a) des Verbindungselements und der Seitenwand (2a) des Hohlraums durch eine Rotationsbewegung des Verbindungselements während des Einbringens entsteht.

2. Verfahren nach Anspruch 1, bei dem das Verbindungselement (1) einen Innenabschnitt (1b) zum Aufnehmen eines Befestigungselements (4), insbesondere einer Schraube, aufweist.

3. Verfahren nach einem der Ansprüche 1 und 2, bei dem der Außenabschnitt (1a) und das Werkstück (2) nach Erhärten des Materials stoffschlüssig und/oder formschlüssig miteinander verbunden sind.

4. Verfahren nach einem der vorangegangenen Ansprüche, bei dem das Verbindungselement (1) Aktivierungselemente oder eine Aktivierungsschicht, insbesondere Absorberpartikel oder eine Absorberschicht, aufweist.

5. Verfahren nach einem der vorangegangenen Ansprüche, bei dem der Hohlraum (3) eine Sacklochbohrung im Werkstück ist.

6. Verfahren nach einem der vorangegangenen Ansprüche, bei dem das Verbindungselement (1) frei von Klebstoffen ist.

7. Verfahren nach einem der vorangegangenen Ansprüche, bei dem das erweichbare Material ein Thermoplast ist.

8. Verfahren nach einem der vorangegangenen Ansprüche, bei dem das Verbindungselement (1) zylinderförmig ausgebildet ist.

## Claims

1. Method for connection of a connecting element, in particular a dowel (1), to a workpiece (2), comprising the following steps:
providing the workpiece (2), which consists at least in sections of wood and/or wood materials and a cavity (3) with at least one side wall (2a) for receiving the connecting element (1),
providing the connecting element (1), which has a cast body made of a biologically degradable material, in particular biopolymer, and an outer section (1a) of the connecting element (1) is provided for contacting the side wall (2a) of the workpiece (2),
inputting energy into the outer section (1a), at least in sections, and softening the outer section (1a), at least in sections, through the input of energy,
hardening the outer section (1a) in contact, at least in sections, with the side wall (2a) of the cavity of the workpiece (2), as a result of which the connecting element is, at least in sections, connected on its outer section (1a) with the workpiece (2), wherein
the energy input comprises frictional heat which is generated on inserting the connecting element (1) into the cavity (3) through friction between the outer section (1a) of the connecting element and the side wall (2a) of the cavity through a rotary movement of the connecting element during insertion.

2. Method according to claim 1, wherein the connecting element (1) has an inner section (1b) for receiving a fastening element (4), in particular a screw.

3. Method according to one of the claims 1 and 2, wherein following hardening of the material the outer section (1a) and the workpiece (2) are connected with one another through a substance-to-substance bond and/or in a form-fitting manner.

4. Method according to one of the preceding claims, wherein the connecting element (1) has activating elements or an activating layer, in particular absorber particles or an absorber layer.

5. Method according to one of the preceding claims, wherein the cavity (3) is a blind bore in the workpiece.

6. Method according to one of the preceding claims, wherein the connecting element (1) is free of adhesives.

7. Method according to one of the preceding claims, wherein the softenable material is a thermoplastic.

8. Method according to one of the preceding claims, wherein the connecting element (1) is cylindrical in form.

## Revendications

1. Procédé de liaison d'un élément de liaison, en particulier d'une cheville (1), avec une pièce à usiner (2) qui comporte les étapes suivantes :
la mise à disposition de la pièce à usiner (2) qui présente au moins par sections du bois et/ou des matériaux dérivés du bois et un espace creux (3) avec au moins une paroi latérale (2a) pour la réception de l'élément de liaison (1),
la mise à disposition de l'élément de liaison (1) qui présente un corps formé initialement en matériau biodégradable, en particulier en biopolymère, et une section extérieure (1a) de l'élément de liaison (1) est prévue pour la mise en contact de la paroi latérale (2a) de la pièce à usiner (2),
l'amenée de l'énergie au moins par sections dans la section extérieure (1a) et l'atteinte au moins par sections de la section extérieure (1a) par l'amenée d'énergie,
le durcissement de la section extérieure (1a) en contact au moins par sections avec la paroi latérale (2a) de l'espace creux de la pièce à usiner (2), par quoi l'élément de liaison est relié au moins par sections au niveau de sa section extérieure (1a) à la pièce à usiner (2), dans lequel
l'amenée d'énergie comprend de la chaleur de friction qui apparaît lors de l'introduction de l'élément de liaison (1) dans l'espace creux (3) par friction entre la section extérieure (1a) de l'élément de liaison et la paroi latérale (2a) de l'espace creux par un mouvement de rotation de l'élément de liaison pendant l'introduction.

2. Procédé selon la revendication 1, dans lequel l'élément de liaison (1) présente une section intérieure (1b) pour la réception d'un élément de fixation (4), en particulier d'une vis.

3. Procédé selon l'une quelconque des revendications 1 et 2, dans lequel la section extérieure (1a) et la pièce à usiner (2) sont raccordées entre elles par matière et/ou par complémentarité de formes après durcissement du matériau.

4. Procédé selon l'une quelconque des revendications précédentes, dans lequel l'élément de liaison (1) présente des éléments d'activation ou une couche d'activation, en particulier des particules d'absorption ou une couche d'absorption.

5. Procédé selon l'une quelconque des revendications précédentes, dans lequel l'espace creux (3) est un trou borgne dans la pièce à usiner.

6. Procédé selon l'une quelconque des revendications précédentes, dans lequel l'élément de liaison (1) est exempt de colles.

7. Procédé selon l'une quelconque des revendications précédentes, dans lequel le matériau pouvant être ramolli est un thermoplaste.

8. Procédé selon l'une quelconque des revendications précédentes, dans lequel l'élément de liaison (1) est réalisé en forme de cylindre.
